# EUROPÄISCHE PATENTSCHRIFT

(11) **EP 2 726 715 B1**
(45) Veröffentlichungstag und Bekanntmachung des Hinweises auf die Patenterteilung: **05.04.2017**
(21) Anmeldenummer: 12735489.2
(22) Anmeldetag: 29.06.2012
(51) Int. Cl.: F01L 1/047, B21D 53/84, B22D 19/00, F16H 53/02

(54) **NOCKENWELLE MIT AXIAL VERSCHIEBBAREM NOCKENPAKET**
CAMSHAFT WITH AXIALLY SLIDABLE CAM PAKET
ARBRE À CAMES À PAQUET DE CAMES DÉPLACABLE AXIALEMENT

(30) Priorität: 30.06.2011 DE 102011051480
(43) Veröffentlichungstag der Anmeldung: 07.05.2014
(73) Patentinhaber: Thyssenkrupp Presta Teccenter Ag, 9492 Eschen (LI)
(72) Erfinder: BINDER, Thomas, A-6800 Feldkirch (AT); WIESNER, Peter, FL-9493 Mauren (LI)
(74) Vertreter: ThyssenKrupp Intellectual Property GmbH
(86) Internationale Anmeldenummer: PCT/EP2012/062693
(87) Internationale Veröffentlichungsnummer: WO 2013/001060

(56) Entgegenhaltungen:
- EP-A2- 1 754 913
- WO-A1-2011/072782
- CH-A5- 694 277
- DE-A1- 4 004 505
- DE-A1-102009 022 657
- DE-A1-102009 052 222
- DE-A1-102010 004 591
- DE-A1-102010 060 766
- DE-B3-102004 009 074
- JP-A- 56 039 356
- US-A- 5 041 253
- US-A1- 2006 266 492

## Beschreibung

Die Erfindung betrifft eine Nockenwelle mit einer Trägerwelle, die in einer Wellenachse drehbeweglich lagerbar ist, wobei auf der Trägerwelle wenigstens ein Nockenpaket axial verschieblich angeordnet ist, und wobei das Nockenpaket wenigstens zwei Nocken und wenigstens ein Verstellglied zur axialen Verstellung des Nockenpaketes umfasst.

Derartige Nockenwellen werden für Brennkraftmaschinen verwendet, die mit einem verstellbaren Ventilhub oder mit verstellbaren Ventilsteuerzeiten betrieben werden können. Die Ventile der Brennkraftmaschine werden über Nockenpakete angesteuert, die axial verschieblich auf der rotierenden Trägerwelle angeordnet sind. Durch die axiale Verschiebung des Nockenpaketes auf der Trägerwelle können die Ventile mit verschiedenen Nocken gesteuert werden, wobei die verschiedenen Nocken unterschiedliche Nockenformen aufweisen können. Dabei können sowohl die Nockenkuppen geometrisch unterschiedlich stark ausgeprägt sein oder die Position der Nockenkuppen in Umfangsrichtung variiert zueinander. Auch sind Nocken bekannt, die als Nullhubnocken ausgeführt sind.

Nockenpakete weisen mehrere Nocken auf, wobei wenigstens ein Verstellglied Bestandteil des Nockenpaketes ist, über das die axiale Verschiebung in das Nockenpaket eingeleitet wird.

### STAND DER TECHNIK

Aus der DE 10 2009 022 657 A1 ist eine Nockenwelle mit einer Trägerwelle bekannt, die in einer Wellenachse drehbeweglich lagerbar ist, um in einer Brennkraftmaschine betrieben zu werden. Auf der Trägerwelle ist ein Nockenpaket angeordnet, das beispielhaft aus vier Nocken ausgebildet ist. Das Nockenpaket umfasst ein Trägerrohr, das über eine Innenverzahnung und eine Außenverzahnung axial verschieblich auf der Trägerwelle angeordnet ist, sodass die Drehbewegung der Trägerwelle über einen geometrischen Formschluss auf das Trägerrohr übertragen wird. Auf dem Trägerrohr sind mehrere Nocken angeordnet, sodass das Nockenpaket vier Nocken mit zwei unterschiedlichen Nockenkonturen aufweist. Zur axialen Verschiebung des Nockenpaketes weist das Trägerrohr Axialanschläge auf, in denen außenumfänglich Kurvenbahnen eingebracht sind, die mit einem Übertragungselement zusammenwirken können.

Die DE 10 2004 011 586 A1 zeigt eine weitere Nockenwelle mit einer Trägerwelle, und es ist ein Trägerrohr gezeigt, das mit mehreren Nocken einteilig ausgeführt ist. Das Trägerrohr besitzt eine Innenverzahnung, die mit einer Außenverzahnung der Trägerwelle kämmt, um das Nockenpaket axial auf der Trägerwelle verschieblich anzuordnen, und um zugleich eine Drehübertragung der Trägerwelle auf das Nockenpaket durch einen geometrischen Formschluss zu schaffen. Zwischen den Nockenkonturen weist das Trägerrohr ein Lagerelement auf, um das Nockenpaket in einem Lagerbock drehbar zu lagern, der beispielsweise Bestandteil eines Zylinderkopfes sein kann.

Nachteilhafterweise weisen die Nockenwellen gemäß dem Stand der Technik Nockenpakete auf, die in gebauter Variante ein Trägerrohr erforderlich machen, um verschiedene Steuerelemente und Verstellglieder zu einem Nockenpaket zu fügen, oder massiv gefertigt werden müssen. Das Trägerrohr dient dabei zur Aufnahme auf der Trägerwelle und weist die notwendige Innenverzahnung auf, die mit der Außenverzahnung auf der Trägerwelle kämmen kann. Nachteilhafterweise entsteht durch die Verwendung eines Trägerrohres zur Aufnahme der Nocken und Verstellglieder ein aufwendiger Aufbau, und die Nocken müssen mit einer notwendigen Verbindungstechnik auf dem Trägerrohr angeordnet werden. Sind das Trägerrohr und die Nocken sowie beispielsweise auch das Verstellglied insgesamt einteilig ausgeführt, entsteht ein aufwendig herzustellendes Bauteil, an dem eine Vielzahl von Bearbeitungsoperationen ausgeführt werden müssen. Jedoch ist es technisch vorteilhaft, sowohl eine spanende Bearbeitung als auch eine thermische Behandlung verschiedener Elemente des Nockenpaketes einzeln vornehmen zu können.

### OFFENBARUNG DER ERFINDUNG

Es ergibt sich die Aufgabe der vorliegenden Erfindung, eine Nockenwelle mit einem Nockenpaket zu schaffen, das die vorstehend bezeichneten Nachteile des Standes der Technik überwindet und einen einfachen Aufbau aufweist, wobei die verschiedenen Elemente des Nockenpaketes auch einzeln spanend bearbeitet und thermisch behandelt werden können.

Diese Aufgabe wird ausgehend von einer Nockenwelle mit einem axial verschiebbaren Nockenpaket gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Nocken und das wenigstens eine Verstellglied in axial benachbarter Anordnung durch einen angeformten Körper miteinander vergossen sind, wobei der Körper durch ein Urformverfahren an wenigstens einen Nocken und das Verstellglied angeformt ist und wobei durch den angeformten Körper ein Verbund gebildet ist, der in direkter Anordnung auf der Trägerwelle axial verschiebbar auf dieser aufnehmbar ist, und wobei die Nocken eine Innenverzahnung aufweisen, die mit einer Außenverzahnung der Trägerwelle axial verschiebbar im Eingriff steht..

Die Erfindung geht dabei von dem Gedanken aus, die einzelnen Steuerelemente des Nockenpaketes unmittelbar miteinander in Verbindung zu bringen, um das Nockenpaket ohne die Verwendung eines Trägerrohres auszuführen. Durch die direkte Verbindung der Nocken und des wenigstens einen Verstellgliedes mit den benachbart zu diesen angeordneten Nocken, im allgemeinen Gedanken der Erfindung ferner jedes an einem Nockenpaket beteiligten Elementes, erübrigt sich die Verwendung eines Trägerrohres, und die Nocken und das wenigstens eine Verstellglied können direkt auf der Trägerwelle axial verschiebbar angeordnet werden. Durch die direkte Verbindung der Nocken untereinander und des Verstellgliedes mit den benachbart zu diesem angeordneten Nocken wird ein Verbund aus einzelnen Elementen geschaffen, die vor der gemeinsamen Verbindung miteinander einzeln bearbeitet werden können. Nachdem der Verbund aus den Nocken und dem Verstellglied geschaffen ist, kann dieser ohne weitere Verwendung eines Trägerrohres oder eines sonstigen Elementes direkt auf der Trägerwelle angeordnet werden.

Um den Verbund herzustellen, werden wenigstens ein und vorzugsweise mehrere Nocken und das Verstellglied durch den angeformten Körper miteinander vergossen. Der Körper kann hierfür durch ein Urformverfahren an den wenigstens einen Nocken und das Verstellglied angeformt werden, wodurch der angeformte Körper eine stabile, mechanisch belastbare Verbindung zwischen dem Nocken und dem Verstellglied bildet.

Der Körper kann in einem Spritzgussverfahren oder in einem Druckgussverfahren an den wenigstens einen Nocken und an das Verstellglied angegossen werden, wobei vorzugsweise das Material des Körpers aus Aluminium, aus Magnesium oder aus Kunststoff gebildet ist. Beispielsweise kann der Körper in einem Spritzgussverfahren an den wenigstens einen Nocken und an das Verstellglied angespritzt werden, wenn das Material aus Kunststoff gebildet ist. Besteht das Material aus Magnesium und/oder aus Aluminium, so kann beispielsweise ein Metall-Druckgussverfahren zur Anwendung kommen. Der angeformte Körper kann alternativ zu einem Gießverfahren auch in einem Sinterverfahren, z.B. aus einem Granulat oder aus einem Pulver, an den wenigstens einen Nocken und das Verstellglied angeformt, insbesondere angegossen werden.

Im Rahmen der vorliegenden Erfindung kann auch vorgesehen sein, dass zum Beispiel auch nur die Verbindung zwischen zwei oder mehr Nocken mit einem angeformten Körper hergestellt wird.

Die Erfindung bietet den besonderen Vorteil, die Nocken mit einer Innenverzahnung auszuführen, die mit einer Außenverzahnung der Trägerwelle axial verschiebbar im Eingriff stehen und gleichzeitig in Umfangsrichtung Drehmomente übertragen kann. Die Innenverzahnung ist vorzugsweise direkt in die Nocken eingebracht, um das bereits mit den Nocken und dem Verstellglied gebildete Nockenpaket axial beweglich und drehübertragend auf der Trägerwelle anzuordnen. Mit weiterem Vorteil können beispielsweise lediglich außenseitige Elemente, beispielsweise eine erste außenseitige Nocke und eine gegenüberliegende, zweite außenseitige Nocke, mit einer Innenverzahnung ausgeführt sein, die mit einer beispielsweise durchgehenden Außenverzahnung auf der Trägerwelle in Eingriff stehen kann. Dadurch wird der Vorteil erreicht, dass lediglich zwei Elemente des Nockenpaketes mit einer Innenverzahnung ausgeführt werden müssen, die vorzugsweise außenseitig das Nockenpaket abschließen. Weitere Elemente des Nockenpaketes, die zwischen den außenseitig angeordneten Elementen mit Innenverzahnung angeordnet sind, können optional weitere Innenverzahnungen aufweisen. Es ist zudem denkbar, dass auch das Verstellglied eine vergleichbar zu den Nocken ausgebildete Innenverzahnung aufweist.

Mit weiterem Vorteil kann in wenigstens einen der Nocken, jedoch vorzugsweise im Verstellglied zumindest eine Rastnut eingebracht sein, die zur axialen Verrastung des Nockenpaketes mit einem Rastmittel zusammenwirken können, das in der Trägerwelle angeordnet ist. Das Rastmittel kann beispielsweise eine federbelastete Kugel sein, die in die Rastnuten eingedrückt wird. Damit können definierte axiale Positionen des Nockenpaketes durch die axiale Verstellung definiert werden, wobei die Anzahl der Rastnuten vorzugsweise mit der Anzahl der Nocken verschiedener Nockenkonturen korrespondiert. Mit besonderem Vorteil können die Rastnuten in Elementen des Nockenpaketes eingebracht sein, die nicht mit einer Innenverzahnung ausgeführt sind.

Die Nocken und das Verstellglied können zumindest über Teilbereiche ihrer jeweiligen Stirnseiten miteinander verbunden sein. Die Stirnseiten können durch Planflächen gebildet sein, zu denen die Wellenachse eine Flächennormale bildet. Werden die Nocken und das Verstellglied in axial benachbarter Anordnung plan aufeinander gebracht, kann die Verbindung zwischen den Nocken und/oder dem Verstellglied vorgenommen werden. Mit besonderem Vorteil können die Verbindungen als stoffschlüssige Verbindungen ausgeführt werden.

Die stoffschlüssigen Verbindungen zwischen den Nocken und dem wenigstens einen Verstellglied und den dazu benachbarten Nocken können mittels Schweißverbindungen ausgeführt sein, und es können Schweißverbindungen beispielsweise außenumfänglich und/oder innenumfänglich angeordnet werden. Die Schweißverbindungen können beispielsweise mit einem Laserstrahl-Schweißverfahren oder mit einem Elektronenstrahl-Schweißverfahren ausgeführt werden, um die wärmebeeinflusste Materialzone in den Nocken und/oder im Verstellglied zu minimieren. Ferner kann durch diese Schweißverfahren der thermische Verzug der Paketanordnung des Nockenpaketes minimiert werden. Mit besonderem Vorteil kann die Schweißverbindung mit Bildung einer Dampfkapillare erzeugt werden, um eine besonders tiefe Einschweißung zwischen den Stirnflächen der Nocken und/oder des Verstellgliedes zu erzeugen, sodass die Schweißverbindung mechanisch besonders hoch belastbar ist.

Nach einer möglichen Ausführungsform der Erfindung können die stoffschlüssigen Verbindungen zwischen den Nocken und dem wenigstens einen Verstellglied mittels Lötverbindungen und/oder Klebeverbindungen ausgeführt werden. Grundsätzlich kann nach Herstellung der stoffschlüssigen Verbindungen zwischen den Nocken und dem Verstellglied eine mechanische Endbearbeitung der Funktionsflächen der Nocken und/oder des Verstellgliedes erfolgen.

Mit weiterem Vorteil können die Verbindungen zwischen den Nocken untereinander und des Verstellgliedes mit den benachbart dazu angeordneten Nocken über zumindest einen und vorzugsweise mehrere auf dem Umfang des Nockenpaketes gleich verteilte Zuganker ausgebildet sein, der oder die sich durch die Nocken und das Verstellglied hindurch erstrecken. Die Zuganker können durch Gewindebolzen oder dergleichen gebildet sein und können nach Anordnung im Nockenpaket eine Zugspannung aufnehmen. Folglich werden die Nocken und das Verstellglied axial aufeinander gepresst, um einen mechanisch belastbaren Verbund aus den Nocken und dem Verstellglied zu bilden. Alternativ ist auch denkbar, die Nocken miteinander und das Verstellglied mit seinen benachbarten Nocken durch eine oder mehrere Nietverbindungen zu verbinden. Mit weiterem Vorteil können die Nocken und das Verstellglied beispielsweise miteinander verstiftet werden, oder es können an den Stirnseiten der Nocken und des Verstellgliedes Formschlussgeometrien angebracht sein, um anschließend die Zuganker durch die Nocken und das Verstellglied hindurchzuführen und unter Zugspannung zu setzen.

Als weitere mögliche Ausführungsform der Erfindung können die Verbindungen der Nocken und des wenigstens einen Verstellgliedes mit seinen benachbarten Nocken jeweils über zumindest ein formschlüssig wirkendes Fügeelement ausgebildet sein, das vorzugsweise an den Nocken und/oder am wenigstens einen Verstellglied angeordnet oder zwischen den Stirnseiten ausgebildet ist. Die formschlüssig wirkenden Fügeelemente können einteilig mit den Nocken und/oder dem Verstellglied ausgebildet oder sogar an diesen angeformt sein. Beispielsweise können zwischen den Nocken und/oder dem Verstellglied Gewindeverbindungen, Bajonettverbindungen, Hinterschnittverbindungen oder sonstige Verbindungen vorgesehen sein, oder es sind Fügeelemente wie Nutensteine oder dergleichen vorgesehen. Grundsätzlich kann jede mögliche Verbindungsausführung zwischen den Nocken und/oder dem Verstellglied vorgesehen sein, um diese mechanisch belastbar miteinander zu verbinden. Die Verbindung der Nocken und/oder des Verstellgliedes sollte vorzugsweise spielfrei herstellbar sein, und die Verbindung sollte die rotatorische Position der Elemente um die gemeinsame Wellenachse aufrechterhalten.

Nach einer weiteren vorteilhaften Ausführungsform kann das Nockenpaket wenigstens ein Lagerelement umfassen, das vorzugsweise zur Bildung einer Nullhubnocke ausgebildet ist. Eine Nullhubnocke weist eine zylindrische Mantelfläche auf, wobei das Lagerelement eine axiale Breite aufweisen kann, die sowohl die Lagerung des Nockenpaketes über das Lagerelement als auch die gleichzeitige Wirkverbindung des Lagerelementes mit einem Abgriffselement zur Ventilsteuerung ermöglicht. Auch das Lagerelement kann mittels des angeformten Körpers mit zumindest einer Nocke und/oder mit dem Verstellglied verbunden werden.

Gemäß einer vorteilhaften Weiterbildung der erfindungsgemäßen Nockenwelle können mehrere Nocken wenigstens ein Mehrfachnockenelement bilden, wobei wenigstens ein Mehrfachnockenelement in axial benachbarter Anordnung zum Verstellglied durch den angeformten Körper mit dem Verstellglied verbunden wird, und das Mehrfachnockenelement weist mehrere vorzugsweise zueinander unterschiedliche Nockenkonturen auf. Das Mehrfachnockenelement kann eine Durchgangsbohrung aufweisen, in der die Innenverzahnung eingebracht ist. Folglich können mehrere Nocken einheitlich und aus einem Bauteil durch das Mehrfachnockenelement zur Herstellung des Nockenpaketes bereitgestellt werden. Der angeformte Körper kann dabei so zwischen dem Mehrfachnockenelement und dem Verstellglied angeformt, insbesondere angegossen, angespritzt oder im Druckgussverfahren angeformt werden, dass eine Verbindung zwischen dem Mehrfachnockenelement und dem Verstellglied entsteht. Gemäß einer weiteren vorteilhaften Ausführungsform kann das Verstellglied wenigstens zweiteilig ausgebildet sein, wobei ein erster Teil des Verstellgliedes durch ein Steuerkonturelement und ein zweiter Teil des Verstellgliedes durch den angeformten Körper gebildet wird. Im Steuerkonturelement ist eine Steuerbahn eingebracht, die mit einem externen Element zusammenwirkt, um das Nockenpaket entlang der Wellenachse auf der Trägerwelle zu verschieben.

Das Mehrfachnockenelement kann einen Fügeabschnitt aufweisen, wobei wenigstens ein Fügeabschnitt eines Mehrfachnockenelementes in das ringförmig ausgebildete Steuerkonturelement wenigstens teilweise eingeführt ist, und wobei der angeformte Körper den Fügeabschnitt und das Steuerkonturelement miteinander verbindet. Das Material des angeformten Körpers füllt dabei insbesondere den radialen Spalt zwischen dem Fügeabschnitt des Mehrfachnockenelementes und der Innenseite des Steuerkonturelementes aus. Der angeformte Körper kann in Richtung zur Wellenachse breiter ausgeführt werden als das Steuerkonturelement, sodass das Steuerkonturelement in den angeformten Körper eingebettet und somit durch diesen aufgenommen ist. Zugleich entsteht durch den angeformten Körper eine mechanisch belastbare Verbindung zwischen dem Steuerkonturelement und dem Mehrfachnockenelement, sodass der angeformte Körper sowohl einen Teil des Verstellgliedes als auch ein Mittel zur Verbindung des Verstellgliedes mit dem Mehrfachnockenelement bildet. Auf gleiche Weise kann der angeformte Körper auch einen Teil des Verstellgliedes bilden und ferner das Steuerkonturelement mit einem Nockenkörper verbinden.

Am Fügeabschnitt des Mehrfachnockenelementes kann ein Formschlussbund angeordnet sein, sodass mit dem angeformten Körper zumindest in Richtung der Wellenachse ein Formschluss zwischen dem Verstellglied und dem Mehrfachnockenelement gebildet ist. Der Formschlussbund kann beispielsweise einen Kragen am Ende des Fügeabschnittes des Mehrfachnockenelementes bilden, der durch den angeformten Körper umgossen oder umspritzt wird.

Zusätzlich oder alternativ kann in den Fügeabschnitt eine Anzahl von Löchern eingebracht werden, in die das Material des angeformten Körpers formschlüssig eingreift. Somit kann ein Formschluss zwischen dem angeformten Körper und dem Fügeabschnitt erzeugt werden, der mechanisch hoch belastbar ist.

Ein vorteilhaft ausgestaltetes Nockenpaket kann insbesondere dann gebildet werden, wenn auf einer ersten Seite eines Steuerkonturelementes ein erstes Mehrfachnockenelement mit einem ersten Fügeabschnitt und auf einer zweiten, gegenüberliegenden Seite des Steuerkonturelementes ein zweites Mehrfachnockenelement mit einem zweiten Fügeabschnitt angeordnet ist, sodass beide Mehrfachnockenelemente durch den angeformten Körper miteinander verbunden sind und wobei insbesondere das Steuerkonturelement in den angeformten Körper zur Bildung des Verstellgliedes eingebettet ist. Der angeformte Körper bildet somit einen Verbindungskörper zwischen dem Verstellelement und einem ersten und einem zweiten Mehrfachnockenelement. Die Fügeabschnitte der sich gegenüberstehenden Mehrfachnockenelemente können dabei stirnseitig aneinanderstoßen, und sind endseitig an den Fügeabschnitten Formschlussbunde angeformt, so bilden diese einen gemeinsamen Kragen, der vom Material des angeformten Körpers umschlossen und somit formschlüssig zwischen den beiden Mehrfachnockenelementen eine Verbindung bildet.

Die Erfindung betrifft ferner ein Nockenpaket umfassend zumindest zwei Nocken und wenigstens ein Verstellglied zur axialen Verstellung des Nockenpaketes auf einer Trägerwelle, wobei die Nocken und das wenigstens eine Verstellglied in axial benachbarter Anordnung durch einen angeformten Körper miteinander vergossen sind, wobei der Körper durch ein Urformverfahren an wenigstens einen Nocken und das Verstellglied angeformt ist und wobei durch den angeformten Körper ein Verbund gebildet ist, der zur direkten Anordnung auf der Trägerwelle ausgebildet ist, und wobei die Nocken eine Innenverzahnung aufweisen, die mit einer Außenverzahnung der Trägerwelle axial verschiebbar in Eingriff bringbar ist. Die Vorteile und Ausführungsformen der vorstehend bezeichneten Nockenwelle mit einem entsprechenden Nockenpaket finden für das gattungsbildende Nockenpaket ebenfalls Berücksichtigung.

Die Erfindung betrifft weiterhin ein Verfahren zur Herstellung einer Nockenwelle mit einer Trägerwelle, die in einer Wellenachse drehbeweglich lagerbar ist, wobei auf der Trägerwelle wenigstens ein Nockenpaket axial verschieblich angeordnet wird und wobei das Nockenpaket wenigstens zwei Nocken und wenigstens ein Verstellglied zur axialen Verstellung des Nockenpaketes umfasst, wobei erfindungsgemäß das Verfahren wenigstens die Schritte des Anordnens wenigstens zweier Nocken in eine zum Verstellglied benachbarte Position, des Anformens eines Körpers an den wenigstens einen Nocken und das Verstellglied durch ein Urformverfahren, sodass ein Verbund aus dem wenigstens einen Nocken und dem Verstellglied durch ein Vergießen gebildet wird und das direkte Anordnen des Verbundes auf der Trägerwelle umfasst, wobei die Nocken eine Innenverzahnung aufweisen, die mit einer Außenverzahnung der Trägerwelle axial verschiebbar in Eingriff gebracht wird..

Das Verfahren kann mittels eines Urformwerkzeugs ausgeführt werden, und der wenigstens eine Nocken und/oder das wenigstens eine Mehrfachnockenelement sowie das Verstellglied werden in das Urformwerkzeug in axial benachbarter Anordnung zueinander eingebracht. Die eingebrachten Komponenten können in ihrer Lage im Urformwerkzeug fixiert werden, sodass diese bereits eine Position einnehmen, die der späteren Position zur Bildung des Nockenpaketes entspricht. Anschließend kann das Material des anzuformenden Körpers in das Urformwerkzeug eingebracht werden, beispielsweise durch einen Spritzguss- oder einen Druckgussvorgang. Nach dem Aushärten des angeformten Körpers kann der so gebildete Verbund aus dem Urformwerkzeug entnommen werden. Beispielsweise kann anschließend noch eine spanende Endbearbeitung der Komponenten erfolgen. So kann beispielsweise vorgesehen sein, dass die Nocken in ihrer eingenommenen Position im Verbund des Nockenpaketes zur Schaffung der endgültigen Nockenkontur geschliffen und poliert werden.

Das beschriebene Verfahren kann anstatt eines bereits vollständigen Verstellgliedes mit einem Steuerkonturelement ausgeführt werden, und der angeformte Körper bildet neben dem Steuerkonturelement einen weiteren Teil zur Vervollständigung des Verstellgliedes. Alternativ zu einzelnen Nocken kann auch wenigstens ein Mehrfachnockenelement vorgesehen sein, und das Mehrfachnockenelement wird in axial benachbarter Anordnung zum Verstellglied oder zum Steuerkonturelement im Urformwerkzeug angeordnet, sodass anschließend das Material zur Bildung des angeformten Körpers angegeben wird. Besonders vorteilhaft können zwei Mehrfachnockenelemente jeweilige Fügeabschnitte aufweisen, die entlang einer gemeinsamen Wellenachse aufeinander zu weisend im Urformwerkzeug angeordnet werden. Im Bereich der Fügeebene, in der die Mehrfachnockenelemente mit ihren Fügeabschnitten aufeinander zuweisen oder stirnseitig aneinander angrenzen, kann ein Verstellglied und vorzugsweise ein Steuerkonturelement ebenfalls eingebracht werden, sodass anschließend das Material zur Bildung des angeformten Körpers in den radialen Bereich zwischen dem etwa ringförmigen Steuerkonturelement und den Fügeabschnitten der Mehrfachnockenelemente eingebracht und vorzugsweise eingespritzt oder eingegossen wird.

Das erfindungsgemäße Verfahren umfasst das Einbringen einer Innenverzahnung in die Nocken, um mit einer Außenverzahnung auf der Trägerwelle axial verschiebbar im Eingriff zu stehen. Es ist zudem denkbar, dass das Verfahren gemäß einer vorteilhaften Ausführungsform auch das Einbringen einer Innenverzahnung in das Verstellglied umfasst, um mit einer Außenverzahnung auf der Trägerwelle axial verschiebbar im Eingriff zu stehen. Die Innenverzahnung wird dabei direkt in das Material der Nocken, vorteilhaft auch in das Material des Verstellgliedes eingebracht. Gemäß einem weiteren vorteilhaften Verfahrensschritt wird in wenigstens eine Nocke und/oder in das Verstellglied zumindest eine Rastnut eingebracht, die zur axialen Verrastung des Nockenpaketes mit einem Rastmittel zusammenwirken kann, das in der Trägerwelle angeordnet ist.

Nach einer möglichen Ausführungsform des erfindungsgemäßen Verfahrens kann die Innenverzahnung jeweils einzeln in die Nocken, vorteilhaft auch in das Verstellglied eingebracht werden, wobei erst anschließend die Nocken und das Verstellglied in axial benachbarter Anordnung gegenseitig gefügt werden.

Alternativ können die Nocken und das Verstellglied in axial benachbarter Anordnung gegenseitig gefügt werden, wobei erst anschließend die Innenverzahnung in die Nocken, vorteilhaft auch in das Verstellglied eingebracht wird. Auf gleiche Weise kann die zumindest eine Rastnut vor oder nach dem Fügen der Nocken und des Verstellgliedes miteinander eingebracht werden.

Weitere, die Erfindung verbessernde Maßnahmen werden nachstehend gemeinsam mit der Beschreibung von Ausführungsbeispielen der Erfindung oder Alternativlösungen zur Erfindung anhand der Figuren näher dargestellt. Es zeigt:
- Figur 1: eine quergeschnittene Ansicht durch eine Nockenwelle mit einem Nockenpaket,
- Figur 2: eine quergeschnittene Ansicht eines Nockenpaketes zur Bildung von Verbindungen zwischen den Nocken und dem Verstellglied,
- Figur 3: eine quergeschnittene Ansicht eines Nockenpaketes zur Bildung von alternativen Verbindungen zwischen den Nocken und dem Verstellglied,
- Figur 4: eine quergeschnittene Ansicht eines Nockenpaketes zur Bildung von alternativen Verbindungen zwischen den Nocken und dem Verstellglied und
- Figur 5: ein Nockenpaket, das zur Lagerung in einem Lager ein Lagerelement aufweist,
- Figur 6: ein Ausführungsbeispiel eines erfindungsgemäßen Nockenpaketes, das einen erfindungsgemäß angeformten Körper aufweist und
- Figur 7: das Ausführungsbeispiel des Nockenpaketes gemäß Figur 6 in einer Explosionsdarstellung.

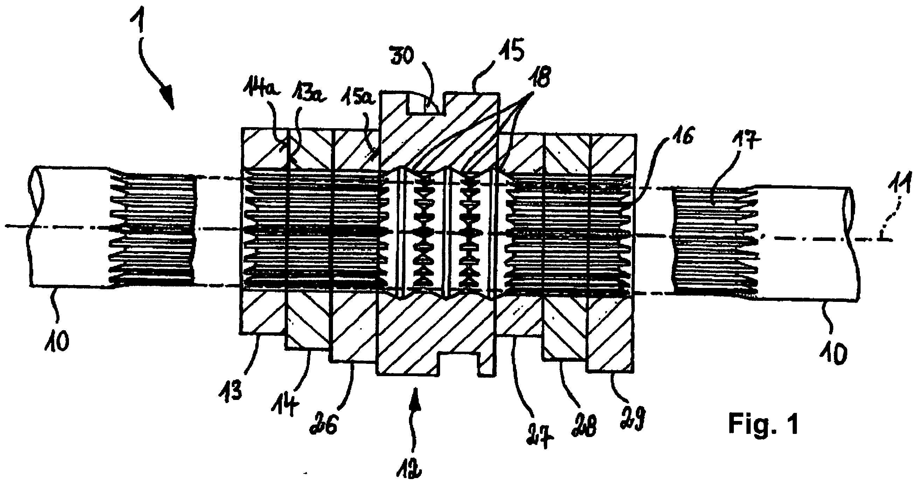

In Figur 1 ist eine Nockenwelle 1 mit einem Nockenpaket 12 gezeigt, die mit Merkmalen der vorliegenden Erfindung ausgeführt ist. Die Nockenwelle 1 weist eine Trägerwelle 10 auf, die im Setzbereich des Nockenpaketes 12 unterbrochen gezeigt ist. Die Trägerwelle 10 kann in einer Wellenachse 11 drehbeweglich lagerbar sein, beispielsweise im Zylinderkopf einer Brennkraftmaschine.

Das Nockenpaket 12 weist beispielhaft sechs Nocken 13, 14, 26, 27, 28 und 29 auf, wobei ein Verstellglied 15 vorgesehen ist, und im Verstellglied 15 ist eine Nutenführung 30 auf dem Außenumfang des Verstellgliedes 15 eingebracht. Die Nocken 13, 14 und 26 befinden sich auf einer ersten Seite des Verstellgliedes 15, und die Nocken 27, 28 und 29 befinden sich auf einer gegenüberliegenden, zweiten Seite des Verstellgliedes 15. Durch die Nocken 13, 14, 26, 27, 28, 29 und durch das Verstellglied 15 erstreckt sich eine Durchgangsbohrung, durch die die Trägerwelle 10 hindurchgeführt ist. In dieser durch die einzelnen Komponenten des Nockenpaketes 12 gebildeten Durchgangsbohrung ist eine Innenverzahnung 16 eingebracht, die mit einer Außenverzahnung 17 auf der Trägerwelle 10 axial verschiebbar und drehmomentübertragend in Eingriff steht. Die Außenverzahnung 17 der Trägerwelle 10 ist in Richtung zur Wellenachse 11 breiter ausgeführt als die Breite des Nockenpaketes 12, und das Nockenpaket 12 kann in Richtung zur Wellenachse axial verstellt werden, indem ein Verstellelement in der Nutenführung 30 des Verstellgliedes 15 geführt wird. Durch den Formschluss der Innenverzahnung 16 und der Außenverzahnung 17 wird dabei zugleich eine Drehbewegung der Trägerwelle 10 auf das Nockenpaket 12 übertragen.

Die Nocken 13, 14, 26, 27, 28, 29 und das Verstellglied 15 sind in axial benachbarter Anordnung zueinander miteinander verbunden, sodass durch die Verbindung dieser Komponenten des Nockenpaketes 12 über ihre jeweiligen sich in axialer Richtung ausbildenden Stirnseiten ein Verbund geschaffen wird, der bereits das Nockenpaket 12 bildet. Dazu ist kein Trägerrohr notwendig, auf dem die einzelnen Komponenten wie die Nocken 13, 14, 26, 27, 28, 29 und das Verstellglied 15 angeordnet werden müssen. Damit können die Innenverzahnung 16 und diese Rastnuten 18 direkt in die Nocken 13, 14, 26, 27, 28, 29 und in das Verstellglied 15 eingebracht werden, wobei beispielhaft drei Rastnuten 18 innenseitig in das Verstellglied 15 eingebracht sind, die zur axialen Verrastung des Nockenpaketes 12 mit einem Rastmittel zusammenwirken können, das in der Trägerwelle 10 in nicht näher gezeigter Weise angeordnet ist.

Die Nocken 13, 14, 26, 27, 28, 29 weisen jeweils unterschiedliche Nockenkonturen auf, beispielsweise können die Nocken 13, 14, 26, 27, 28, 29 unterschiedliche Nockenkuppen aufweisen oder die Nockenkuppen sind in unterschiedlichen Winkeln über dem Umfang ausgebildet. Durch die axiale Verstellbarkeit des Nockenpaketes 12 können Abgreifelemente, die eine feste axiale Position aufweisen, mit verschiedenen Nocken 13, 14, 26 oder 27, 28, 29 zusammenwirken, um beispielsweise den Ventilhub, jedoch beispielsweise auch Ventilsteuerzeiten zu ändern.

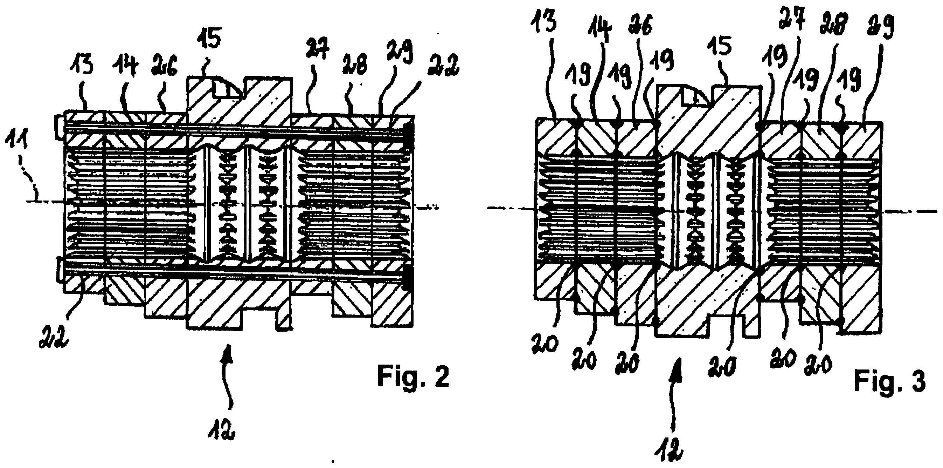

Figur 2 zeigt einen Verbund der Nocken 13, 14, 26, 27, 28, 29 und des Verstellgliedes 15. Die Verbindung ist durch Zuganker 22 gebildet, und es sind beispielhaft zwei Zuganker 22 über dem Umfang des Nockenpaketes 12 dargestellt, wobei insbesondere mehr als zwei Zuganker 22 vorgesehen sein können, die gleichverteilt auf dem Umfang des Nockenpaketes 12 angeordnet sind. Die Zuganker 22 erstrecken sich parallel zur Wellenachse 11 durch die Nocken 13, 14, 26, 27, 28, 29 und das Verstellglied 15, und sind unter axiale Zugspannung gesetzt. Damit werden die Komponenten des Nockenpaketes 12 stirnseitig aufeinander gepresst, um einen mechanisch belastbaren Verbund zu bilden. Die Zuganker 22 können als Schraubelemente oder als Spannstifte ausgebildet werden, um in die Zuganker 22 eine Zugspannung einzubringen.

Figur 3 zeigt eine weitere alternative oder zusätzliche Möglichkeit zur Bildung eines Nockenpaketes 12, wobei die Verbindungen zwischen den Nocken 13, 14, 26, 27, 28, 29 und dem Verstellglied 15 über Schweißverbindungen 19, 20 ausgeführt sind. Die Schweißverbindungen 19 sind als außenumfängliche Schweißverbindungen und die Schweißverbindungen 20 sind als innenumfängliche Schweißverbindungen ausgebildet. Die außenumfänglichen und innenumfänglichen Schweißverbindungen 19 und 20 sind lediglich beispielhaft gezeigt, wobei beispielsweise auch lediglich innenumfängliche Schweißverbindungen 20 ausreichend sein können, um einen mechanisch belastbaren Verbund der Komponenten des Nockenpaketes 12 zu bilden. Beispielsweise können die Schweißverbindungen 19 und 20 durch Laserstrahl-Schweißungen oder durch Elektronenstrahl-Schweißungen erzeugt werden, um die thermische Einwirkung auf die Nocken 13, 14, 26, 27, 28, 29 und das Verstellglied 15 zu minimieren.

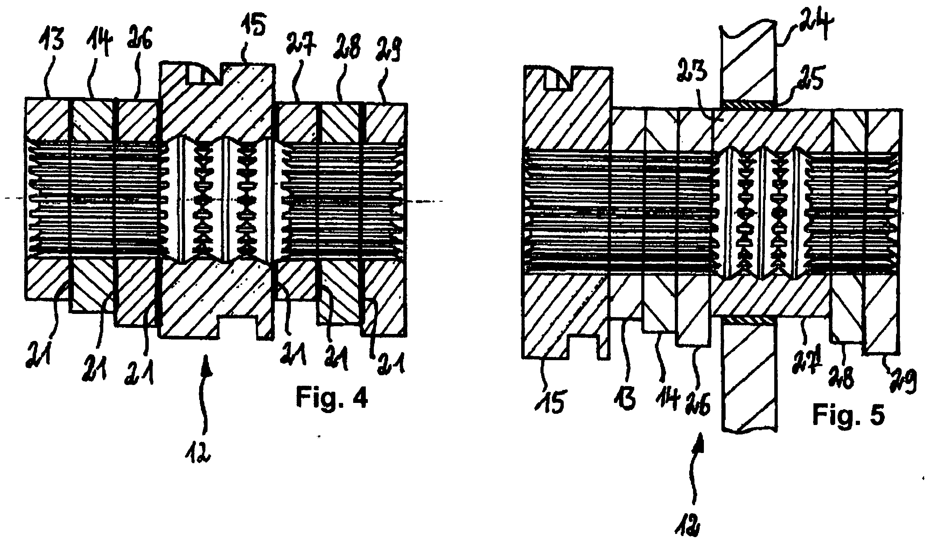

Figur 4 zeigt eine weitere Alternative oder zusätzliche Möglichkeit zur Bildung eines Nockenpaketes 12, wobei die Nocken 13, 14, 26, 27, 28, 29 untereinander und das Verstellglied 15 mit den benachbarten Nocken 26, 27 durch Lötverbindungen 21 verbunden sind. Die Lötverbindungen 21 können beispielsweise durch Lötfolien vorbereitet werden, die zwischen den einzelnen Komponenten des Nockenpaketes 12 angeordnet werden, und nach Anordnung der Nocken 13, 14, 26, 27, 28, 29 und des Verstellgliedes 15 in axial benachbarter Anordnung zueinander kann das derart vorbereitete Nockenpaket 12 auf Lotschmelztemperatur gebracht werden, um die Lötverbindungen 21 fertigzustellen. Alternativ zu den gezeigten Lötverbindungen 21 können Klebeverbindungen zwischen den Komponenten des Nockenpaketes 12 vorgesehen sein.

Figur 5 zeigt ein Nockenpaket 12 mit einem Verstellglied 15 und Nocken 13, 14, 26, 27', 28, 29, wobei die Nocke 27' zugleich als Lagerelement 23 ausgeführt ist. Die Nocke 27' ist als Nullhubnocke ausgeführt, und weist einen zylindrischen Außenumfang auf. Neben dem - nicht weiter gezeigten - Abgriff durch ein Abgriffselement zur Ventilsteuerung ist das Nockenpaket 12 in einem Lagerbock 24 gelagert, in den ein Lager 25 eingebracht ist. Damit erfüllt die Nocke 27' sowohl eine Nullhubfunktion zur Ventilsteuerung als auch die Funktion zur Lagerung des Nockenpaketes 12. Die Verbindung zwischen den Komponenten des Nockenpaketes 12 kann gemäß dem Ausführungsbeispiel in Figur 2, in Figur 3 oder in Figur 4 ausgeführt sein.

Im Ergebnis wird ein Nockenpaket 12 geschaffen, das ohne die Verwendung eines Trägerrohres ausgebildet werden kann. Weiterhin bleibt die Möglichkeit erhalten, die verschiedenen Komponenten des Nockenpaketes 12 jeweils einzeln mechanischen und/oder thermischen Bearbeitungsschritten zuzuführen, um die Komponenten erst anschließend zu einem Nockenpaket 12 miteinander zu verbinden.

Die Innenverzahnung 16, die in die Nocken 13, 14, 26, 27, 28, 29 und in das Verstellglied 15 eingebracht ist, kann in die jeweiligen Komponenten vor der Herstellung der Fügeverbindungen einzeln eingebracht werden oder die Innenverzahnung 16 wird in das Nockenpaket 12 eingebracht, wenn die Fügeverbindungen zwischen den einzelnen Komponenten bereits hergestellt ist.

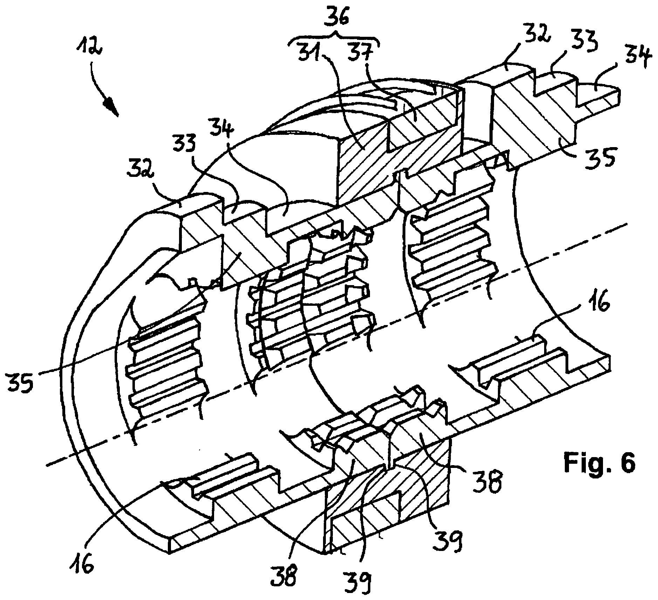

Figur 6 zeigt schließlich eine Ausführungsform eines erfindungsgemäßen Nockenpaketes 12, mit dem die Merkmale der vorliegenden Erfindung dargestellt sind. Das Nockenpaket 12 weist einen Aufbau aus zwei Mehrfachnockenelementen 35 und einem Verstellglied 36 auf. Jedes der Mehrfachnockenelemente 35 weist Nocken 32, 33 und 34 auf, und die zwei Mehrfachnockenelemente 35 sind entlang einer gemeinsamen Wellenachse 11 stirnseitig angrenzend aneinander angeordnet. Innenseitig besitzen die Mehrfachnockenelemente 35 Innenverzahnungen 16, die sich nicht über den gesamten Umfang der Durchgangsbohrung in den Mehrfachnockenelementen 35 durchgehend erstrecken, sondern die Innenverzahnung 16 ist lediglich über Teilbereiche der Innenwand der Mehrfachnockenelemente 35 ausgebildet. Auch ist es möglich, dass die Mehrfachnockenelemente 35 sich stirnseitig gegenüberliegen, sich jedoch nicht berühren sondern einen axialen Abstand zueinander aufweisen, wodurch Gewichtsvorteile erreicht werden.

Das Verstellglied 36 ist durch ein aus einem metallischen Werkstoff bestehendes Steuerkonturelement 37 gebildet, das eine ringförmige Ausgestaltung aufweist. Das Steuerkonturelement 37 umschließt dabei an den Mehrfachnockenelementen 35 angeformte Fügeabschnitte 38, mit denen die Mehrfachnockenelemente 35 aneinander angrenzen, sodass sich die Fügeabschnitte 38 etwa innenseitig in das Steuerkonturelement 37 hinein erstrecken. Zur Vervollständigung des Verstellgliedes 36 wird der radiale Bereich zwischen dem ringförmigen Steuerkonturelement 37 und den Fügeabschnitten 38 mit dem Material eines anzuformenden Körpers 31 aufgefüllt. Das Auffüllen des Materials kann in einem Urformwerkzeug beispielsweise durch ein Gießverfahren geschehen, in das zuvor die Mehrfachnockenelemente 35 und das Steuerkonturelement 37 eingelegt und zueinander positioniert sind. Das Urformwerkzeug kann dabei eine Werkzeugform aufweisen, mit der die freien Flächen des angeformten Körpers definiert werden.

Nach dem Einspritzen oder dem Eingießen des Materials zur Bildung des angeformten Körpers 31 entsteht mit den Mehrfachnockenelementen 35 und dem Steuerkonturelement 37 ein mechanisch belastbarer, fester Verbund, durch den das Nockenpaket 12 einteilig gebildet ist. Um einen Formschluss zwischen den Fügeabschnitten 38 der Mehrfachnockenelemente 35 und dem Material des angeformten Körpers 31 zu schaffen, sind am randseitigen Ende der Fügeabschnitte 38 kragenförmige Formschlussbunde 39 angeformt, sodass in axialer Richtung der Wellenachse 11 ein geometrischer Formschluss zwischen den Fügeabschnitten 38 und dem angeformten Körper 31 gebildet ist.

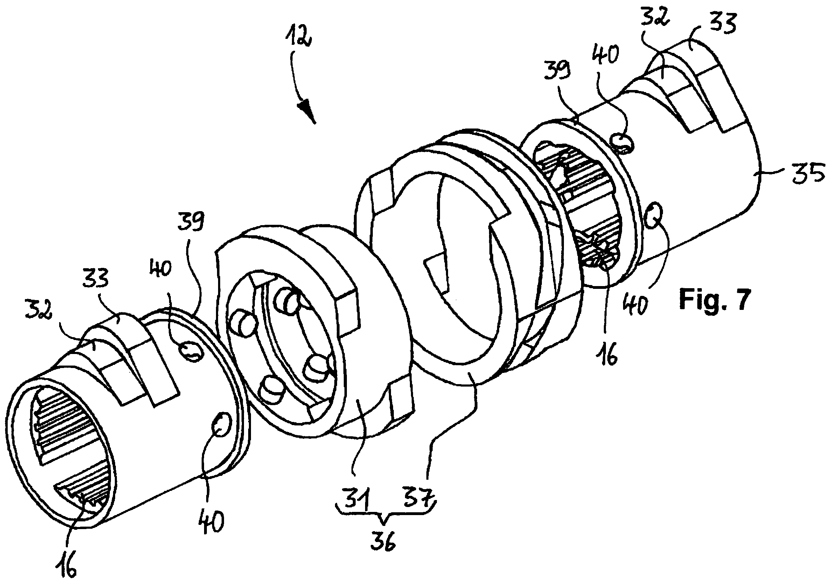

Die Darstellung zeigt lediglich beispielhaft die Verbindung zwischen einem Verstellglied 36 und zwei Mehrfachnockenelementen 35, wobei auch nur ein Mehrfachnockenelement 35 mit einem Verstellglied 36 angeordnet sein kann. Auf gleiche Weise kann mit einem angeformten Körper 31 auch eine Verbindung zwischen einem Verstellglied 15 und einem oder mehreren Nocken 13, 14, 26, 27, 28, 29 geschaffen werden, wie diese beispielsweise in den Figuren 1 bis 5 dargestellt sind. Es ist des Weiteren denkbar, dass zusätzlich zur Ausbildung des angeformten Körpers 31, wie in den Figuren 6 und 7 aufgezeigt, auch Verbindungen, wie in den Figuren 1 bis 5 dargestellt, insbesondere Lötverbindungen oder Schweißverbindungen zwischen den einzelnen Nocken 13, 14, 26, 27, 28, 29, 14, 26, 27, 28, 29 und/oder zwischen den Nocken 13, 14, 26, 27, 28, 29 und dem Verstellglied 36 zur Anwendung gelangen.

Figur 7 zeigt in einer Explosionsdarstellung ein Nockenpaket 12 mit zwei Mehrfachnockenelementen 35 und einem Steuerkonturelement 37, das gemeinsam mit einem Teil des angeformten Körpers 31 das Verstellglied 36 bildet. Der angeformte Körper 31 ist vereinzelt dargestellt, wodurch die sich ausbildende geometrische Form des Körpers 31 verdeutlicht werden soll, ohne dass der angeformte Körper 31 als Einzelteil montiert wird. Das Ausführungsbeispiel zeigt Mehrfachnockenelemente 35 mit einer Innenverzahnung 16 und Nocken 32 und 33, die sich auf dem Außenumfang der Mehrfachnockenelemente 35 befinden. Die Mehrfachnockenelemente 35 weisen ferner Löcher 40 auf, und wenn sich die Mehrfachnockenelemente 35 in einer stirnseitig aneinander angrenzenden Position befinden, so liegen die Löcher 40 im Innenbereich des Steuerkonturelementes 37. Wird anschließend der Werkstoff des damit gebildeten angeformten Körpers 31 eingegossen, so gelangt das Material des Körpers 31 teilweise in die Löcher 40, wodurch ein geometrischer Formschluss zwischen dem Körper 31 und den Mehrfachnockenelementen 35 entsteht. Ebenfalls sind in diesem Ausführungsbeispiel Formschlussbunde 39 am Ende der Mehrfachnockenelemente 35 gezeigt, um einen weiteren geometrischen Formschluss zwischen den Bunden 39 und dem Material des Körpers 31 zu schaffen.

### Bezugszeichenliste

- 1: Nockenwelle
- 10: Trägerwelle
- 11: Wellenachse
- 12: Nockenpaket
- 13: Nocken, 13a Stirnseite
- 14: Nocken, 14a Stirnseite
- 15: Verstellglied, 15a Stirnseite
- 16: Innenverzahnung
- 17: Außenverzahnung
- 18: Rastnut
- 19: außenumfängliche Schweißverbindung
- 20: innenumfängliche Schweißverbindung
- 21: Lötverbindung
- 22: Zuganker
- 23: Lagerelement
- 24: Lagerbock
- 25: Lager
- 26: Nocke
- 27: Nocke
- 27': Nocke
- 28: Nocke
- 29: Nocke
- 30: Nutenführung
- 31: angeformter Körper
- 32: Nocke
- 33: Nocke
- 34: Nocke
- 35: Mehrfachnockenelement
- 36: Verstellglied
- 37: Steuerkonturelement
- 38: Fügeabschnitt
- 39: Formschlussbund
- 40: Loch

## Patentansprüche

1. Nockenwelle (1) mit einer Trägerwelle (10), die in einer Wellenachse (11) drehbeweglich lagerbar ist, wobei auf der Trägerwelle (10) wenigstens ein Nockenpaket (12) axial verschieblich angeordnet ist, und wobei das Nockenpaket (12) wenigstens zwei Nocken (13, 14, 26, 27, 28, 29, 32, 33, 34) und wenigstens ein Verstellglied (15, 36) zur axialen Verstellung des Nockenpaketes (12) umfasst, **dadurch gekennzeichnet, dass** die Nocken (13, 14, 26, 27, 28, 29, 32, 33, 34) und das wenigstens eine Verstellglied (15, 36) in axial benachbarter Anordnung durch einen angeformten Körper (31) miteinander vergossen sind, wobei der Körper (31) durch ein Urformverfahren an wenigstens einen Nocken (13, 14, 26, 27, 28, 29, 32, 33, 34) und das Verstellglied (15, 36) angeformt ist und wobei durch den angeformten Körper (31) ein Verbund gebildet ist, der in direkter Anordnung auf der Trägerwelle (10) axial verschiebbar auf dieser aufnehmbar ist, wobei die Nocken (13, 14, 26, 27, 28, 29, 32, 33, 34) eine Innenverzahnung (16) aufweisen, die mit einer Außenverzahnung (17) der Trägerwelle (10) axial verschiebbar im Eingriff steht.

2. Nockenwelle (1) nach Anspruch 1, **dadurch gekennzeichnet, dass** der Körper (31) in einem Spritzgussverfahren oder in einem Druckgussverfahren an den wenigstens einen Nocken (13, 14, 26, 27, 28, 29, 32, 33, 34) und an das Verstellglied (15, 36) angegossen ist, wobei vorzugsweise das Material des Körpers (31) aus Aluminium, aus Magnesium oder aus Kunststoff gebildet ist.

3. Nockenwelle (1) nach Anspruch 1 oder 2, **dadurch gekennzeichnet, dass** die Nocken (13, 14, 26, 27, 28, 29, 32, 33, 34) und/oder das wenigstens eine Verstellglied (15) zumindest über Teilbereiche ihrer jeweiligen Stirnseiten (13a, 14a, 15a) miteinander verbunden sind, wobei die Verbindungen vorzugsweise als stoffschlüssige Verbindungen und insbesondere als Schweißverbindungen (19, 20), als Lötverbindungen (21) oder als Klebeverbindungen ausgeführt sind, wobei die Schweißverbindungen (19, 20) vorzugsweise außenumfängliche Schweißverbindungen (19) und/oder innenumfängliche Schweißverbindungen (20) umfassen.

4. Nockenwelle (1) nach einem der vorgenannten Ansprüche, **dadurch gekennzeichnet, dass** das Nockenpaket (12) wenigstens ein Lagerelement (23) umfasst, das vorzugsweise zur Bildung einer Nullhubnocke ausgebildet ist.

5. Nockenwelle (1) nach einem der vorgenannten Ansprüche, **dadurch gekennzeichnet, dass** mehrere Nocken (32, 33, 34) wenigstens ein Mehrfachnockenelement (35) bilden, wobei wenigstens ein Mehrfachnockenelement (35) in axial benachbarter Anordnung zum Verstellglied (36) durch den angeformten Körper (31) mit dem Verstellglied (36) verbunden ist.

6. Nockenwelle (1) nach einem der vorgenannten Ansprüche, **dadurch gekennzeichnet, dass** das Verstellglied (36) wenigstens zweiteilig ausgebildet ist, wobei ein erster Teil durch ein Steuerkonturelement (37) und ein zweiter Teil durch den angeformten Körper (31) gebildet ist.

7. Nockenwelle (1) nach Anspruch 6, **dadurch gekennzeichnet, dass** das Mehrfachnockenelement (35) einen Fügeabschnitt (38) aufweist, wobei wenigstens ein Fügeabschnitt (38) eines Mehrfachnockenelementes (35) in das ringförmig ausgebildete Steuerkonturelement (37) wenigstens teilweise eingeführt ist, und wobei der angeformte Körper (31) den Fügeabschnitt (38) und das Steuerkonturelement (37) miteinander verbindet.

8. Nockenwelle (1) nach Anspruch 7, **dadurch gekennzeichnet, dass** am Fügeabschnitt (38) ein Formschlussbund (39) angeordnet ist, sodass mit dem angeformten Körper (31) zumindest in Richtung der Wellenachse (11) ein Formschluss zwischen dem Verstellglied (36) und dem Mehrfachnockenelement (35) gebildet ist.

9. Nockenwelle (1) nach Anspruch 7 oder 8, **dadurch gekennzeichnet, dass** in den Fügeabschnitt (38) Löcher (40) eingebracht sind, in die das Material des angeformten Körpers (31) formschlüssig eingreift.

10. Nockenwelle (1) nach Anspruch 7 bis 9, **dadurch gekennzeichnet, dass** auf einer ersten Seite des Steuerkonturelementes (37) ein erstes Mehrfachnockenelement (35) mit einem ersten Fügeabschnitt (38) und auf einer zweiten, gegenüberliegenden Seite des Steuerkonturelementes (37) ein zweites Mehrfachnockenelement (35) mit einem zweiten Fügeabschnitt (38) angeordnet ist, sodass beide Mehrfachnockenelemente (35) durch den angeformten Körper (31) miteinander verbunden sind und wobei insbesondere das Steuerkonturelement (37) in den angeformten Körper (31) zur Bildung des Verstellgliedes (36) eingebettet ist.

11. Nockenpaket (12) umfassend zumindest zwei Nocken (13, 14, 26, 27, 28, 29, 32, 33, 34) und wenigstens ein Verstellglied (15, 36) zur axialen Verstellung des Nockenpaketes (12) auf einer Trägerwelle (10),
**dadurch gekennzeichnet, dass** die Nocken (13, 14, 26, 27, 28, 29, 32, 33, 34) und das wenigstens eine Verstellglied (15, 36) in axial benachbarter Anordnung durch einen angeformten Körper (31) miteinander vergossen sind, wobei der Körper (31) durch ein Urformverfahren an wenigstens einen Nocken (13, 14, 26, 27, 28, 29, 32, 33, 34) und das Verstellglied (15, 36) angeformt ist und wobei durch den angeformten Körper (31) ein Verbund gebildet ist, der zur direkten Anordnung auf der Trägerwelle (10) ausgebildet ist, wobei die Nocken (13, 14, 26, 27, 28, 29, 32, 33, 34) eine Innenverzahnung (16) aufweisen, die mit einer Außenverzahnung (17) der Trägerwelle (10) axial verschiebbar in Eingriff bringbar ist.

12. Verfahren zur Herstellung einer Nockenwelle (1) mit einer Trägerwelle (10), die in einer Wellenachse (11) drehbeweglich lagerbar ist, wobei auf der Trägerwelle (10) wenigstens ein Nockenpaket (12) axial verschieblich angeordnet wird und wobei das Nockenpaket (12) wenigstens zwei Nocken (13, 14, 26, 27, 28, 29, 32, 33, 34) und wenigstens ein Verstellglied (15, 36) zur axialen Verstellung des Nockenpaketes (12) umfasst,
**gekennzeichnet durch** wenigstens die folgenden Schritte:
- Anordnen wenigstens zweier Nocken (13, 14, 26, 27, 28, 29, 32, 33, 34) in eine zum Verstellglied (15, 36) benachbarte Position,
- Anformen eines Körpers (31) an den wenigstens einen Nocken (13, 14, 26, 27, 28, 29, 32, 33, 34) und das Verstellglied (15, 36) **durch** ein Urformverfahren, sodass ein Verbund aus dem wenigstens einen Nocken (13, 14, 26, 27, 28, 29, 32, 33, 34) und dem Verstellglied (15, 36) **durch** ein Vergießen gebildet wird und
- direktes Anordnen des Verbundes auf der Trägerwelle (10), wobei die Nocken (13, 14, 26, 27, 28, 29, 32, 33, 34) eine Innenverzahnung (16) aufweisen, die mit einer Außenverzahnung (17) der Trägerwelle (10) axial verschiebbar in Eingriff gebracht wird.

13. Verfahren nach Anspruch 12, **dadurch gekennzeichnet, dass** mehrere Nocken (32, 33, 34) wenigstens ein Mehrfachnockenelement (35) bilden, wobei wenigstens ein Mehrfachnockenelement (35) in axial benachbarter Anordnung durch den angeformten Körper (31) mit dem Verstellglied (36) verbunden wird, insbesondere wobei ein Teil des Verstellgliedes (36) durch den angeformten Körper (31) gebildet wird.

14. Verfahren nach Anspruch 12 oder 13, **dadurch gekennzeichnet, dass** der wenigstens eine Nocken (13, 14, 26, 27, 28, 29, 32, 33, 34) und/oder das wenigstens eine Mehrfachnockenelement (35) und das Verstellglied (36) in ein Urformwerkzeug in axial benachbarter Anordnung zueinander eingebracht werden, wobei anschließend der Körper (31) durch ein Gussverfahren in einen durch das Urformwerkzeug, den Nocken (13, 14, 26, 27, 28, 29, 32, 33, 34) bzw. das Mehrfachnockenelement (35) und das Verstellglied (36) begrenzten Hohlraum eingegossen wird.

## Claims

1. Camshaft (1) having a carrier shaft (10) which can be mounted so as to be rotatable about a shaft axis (11), wherein at least one cam assembly (12) is arranged in axially displaceable fashion on the carrier shaft (10), and wherein the cam assembly (12) comprises at least two cams (13, 14, 26, 27, 28, 29, 32, 33, 34) and at least one adjustment element (15, 36) for the axial adjustment of the cam assembly (12), **characterized in that** the cams (13, 14, 26, 27, 28, 29, 32, 33, 34) and the at least one adjustment element (15, 36), in an axially adjacent arrangement, are cast together by way of a formed-on body (31), wherein the body (31) is formed onto at least one cam (13, 14, 26, 27, 28, 29, 32, 33, 34) and the adjustment element (15, 36) by way of a primary forming process, and wherein, by way of the formed-on body (31), an assembly is formed which, in a direct arrangement on the carrier shaft (10), can be received on the latter in axially displaceable fashion, wherein the cams (13, 14, 26, 27, 28, 29, 32, 33, 34) have an internal toothing (16) which is in engagement, in axially displaceable fashion, with an external toothing (17) of the carrier shaft (10).

2. Camshaft (1) according to Claim 1, **characterized in that** the body (31) is cast onto the at least one cam (13, 14, 26, 27, 28, 29, 32, 33, 34) and onto the adjustment element (15, 36) in an injection-moulding process or in a die-casting process, wherein, preferably, the material of the body (31) is formed from aluminium, from magnesium or from plastic.

3. Camshaft (1) according to Claim 1 or 2, **characterized in that** the cams (13, 14, 26, 27, 28, 29, 32, 33, 34) and/or the at least one adjustment element (15) are connected to one another at least over subregions of their respective face sides (13a, 14a, 15a), wherein the connections are preferably in the form of cohesive connections and in particular in the form of welded connections (19, 20), brazed connections (21) or adhesive connections, wherein the welded connections (19, 20) preferably comprise outer-circumference welded connections (19) and/or inner-circumference welded connections (20).

4. Camshaft (1) according to one of the preceding claims, **characterized in that** the cam assembly (12) comprises at least one bearing element (23) which is preferably designed to form a zero-lift cam.

5. Camshaft (1) according to one of the preceding claims, **characterized in that** multiple cams (32, 33, 34) form at least one multi-cam element (35), wherein at least one multi-cam element (35) is, in an arrangement axially adjacent to the adjustment element (36), connected to the adjustment element (36) by way of the formed-on body (31).

6. Camshaft (1) according to one of the preceding claims, **characterized in that** the adjustment element (36) is of at least two-part form, wherein a first part is formed by a control contour element (37) and a second part is formed by the formed-on body (31).

7. Camshaft (1) according to Claim 6, **characterized in that** the multi-cam element (35) has a joining section (38), wherein at least one joining section (38) of a multi-cam element (35) is at least partially inserted into the control contour element (37) of ring-shaped form, and wherein the formed-on body (31) connects the joining section (38) and the control contour element (37) to one another.

8. Camshaft (1) according to Claim 7, **characterized in that**, on the joining section (38), there is arranged a form-fit collar (39) such that, by way of the formed-on body (31), a form fit is formed between the adjustment element (36) and the multi-cam element (35) at least in a direction of the shaft axis (11).

9. Camshaft (1) according to Claim 7 or 8, **characterized in that** holes (40) are formed into the joining section (38), into which holes the material of the formed-on body (31) engages in form-fitting fashion.

10. Camshaft (1) according to Claims 7 to 9, **characterized in that** a first multi-cam element (35) with a first joining section (38) is arranged on a first side of the control contour element (37), and a second multi-cam element (35) with a second joining section (38) is arranged on a second, opposite side of the control contour element (37), such that the two multi-cam elements (35) are connected to one another by way of the formed-on body (31), and wherein, in particular, the control contour element (37) is embedded into the formed-on body (31) in order to form the adjustment element (36).

11. Cam assembly (12) comprising at least two cams (13, 14, 26, 27, 28, 29, 32, 33, 34) and at least one adjustment element (15, 36) for the axial adjustment of the cam assembly (12) on a carrier shaft (10),
**characterized in that** the cams (13, 14, 26, 27, 28, 29, 32, 33, 34) and the at least one adjustment element (15, 36), in an axially adjacent arrangement, are cast together by way of a formed-on body (31), wherein the body (31) is formed onto at least one cam (13, 14, 26, 27, 28, 29, 32, 33, 34) and the adjustment element (15, 36) by way of a primary forming process, and wherein, by way of the formed-on body (31), an assembly is formed which is designed for direct arrangement on the carrier shaft (10), the cams (13, 14, 26, 27, 28, 29, 32, 33, 34) have an internal toothing (16) which can be placed in engagement, in axially displaceable fashion, with an external toothing (17) of the carrier shaft (10).

12. Method for producing a camshaft (1) having a carrier shaft (10) which can be mounted so as to be rotatable about a shaft axis (11), wherein at least one cam assembly (12) is arranged in axially displaceable fashion on the carrier shaft (10), and wherein the cam assembly (12) comprises at least two cams (13, 14, 26, 27, 28, 29, 32, 33, 34) and at least one adjustment element (15, 36) for the axial adjustment of the cam assembly (12),
**characterized by** at least the following steps:
- arranging at least two cams (13, 14, 26, 27, 28, 29, 32, 33, 34) in a position adjacent to the adjustment element (15, 36),
- forming a body (31) onto the at least one cam (13, 14, 26, 27, 28, 29, 32, 33, 34) and the adjustment element (15, 36) by way of a primary forming process, such that an assembly composed of the at least one cam (13, 14, 26, 27, 28, 29, 32, 33, 34) and the adjustment element (15, 36) is formed by way of casting, and
- directly arranging the compound unit on the carrier shaft (10), wherein the cams (13, 14, 26, 27, 28, 29, 32, 33, 34) have an internal toothing (16) which is placed in engagement, in axially displaceable fashion, with an external toothing (17) of the carrier shaft (10).

13. Method according to Claim 12, **characterized in that** multiple cams (32, 33, 34) form at least one multi-cam element (35), wherein at least one multi-cam element (35) is, in an axially adjacent arrangement, connected to the adjustment element (36) by way of the formed-on body (31), wherein, in particular, a part of the adjustment element (36) is formed by the formed-on body (31).

14. Method according to Claim 12 or 13, **characterized in that** the at least one cam (13, 14, 26, 27, 28, 29, 32, 33, 34) and/or the at least one multi-cam element (35) and the adjustment element (36) are placed, in an axially adjacent arrangement with respect to one another, into a primary forming tool, wherein subsequently, by way of a casting process, the body (31) is cast into a cavity delimited by the primary forming tool, by the cam (13, 14, 26, 27, 28, 29, 32, 33, 34) or the multi-cam element (35) and by the adjustment element (36).

## Revendications

1. Arbre à cames (1) avec un arbre de support (10) pouvant être disposé de façon mobile en rotation dans un axe d'arbre (11), au moins un paquet de cames (12) étant disposé de façon à pouvoir coulisser dans le plan axial sur l'arbre de support (10) et le paquet de cames (12) comprenant au moins deux cames (13, 14, 26, 27, 28, 29, 32, 33, 34) et au moins un élément d'ajustement (15, 36) pour l'ajustement axial du paquet de cames (12), **caractérisé en ce que** les cames (13, 14, 26, 27, 28, 29, 32, 33, 34) et l'au moins un élément d'ajustement (15, 36) sont scellés ensemble dans un agencement axialement adjacent par un corps façonné (31), le corps (31) étant façonné par un procédé de formage primaire sur au moins une came (13, 14, 26, 27, 28, 29, 32, 33, 34) et l'élément d'ajustement (15, 36) et un assemblage étant formé par le corps façonné (31), lequel, en étant déplacé axialement sur l'arbre de support (10) dans un agencement direct, peut être reçu sur celui-ci, les cames (13, 14, 26, 27, 28, 29, 32, 33, 34) comportant un endentement intérieur (16) s'engrenant de façon à pouvoir coulisser dans le plan axial avec l'endentement extérieur (17) de l'arbre de support (10).

2. Arbre à cames (1) selon la revendication 1, **caractérisé en ce que** le corps (31) est moulé sur l'au moins une came (13, 14, 26, 27, 28, 29, 32, 33, 34) et sur l'élément d'adjustement (15, 36) dans un procédé de moulage par injection ou dans un procédé de coulée sous pression, de préférence le matériau du corps de support (31) étant formé en aluminium, en magnésium ou en matière plastique.

3. Arbre à cames (1) selon la revendication 1 ou 2, **caractérisé en ce que** les cames (13, 14, 26, 27, 28, 29, 32, 33, 34) et/ou l'au moins un élément d'ajustement (15) sont reliés entre eux via au moins des zones partielles de leurs côtés avant (13a, 14a, 15a) respectifs, les liaisons étant de préférence réalisées sous la forme de liaisons réalisées par complémentarité de matières et notamment sous la forme de liaisons soudées (19, 20), de liaisons brasées (21) ou de liaisons collées, les liaisons soudées (19, 20) comprenant de préférence des liaisons soudées (19) entourant tout l'extérieur et/ou des liaisons soudées (20) entourant tout l'intérieur.

4. Arbre à cames (1) selon l'une quelconque des revendications précédentes, **caractérisé en ce que** le paquet de cames (12) comprend au moins un élément de palier de roulement (23) réalisé de préférence pour la formation d'une came de course nulle.

5. Arbre à cames (1) selon l'une quelconque des revendications précédentes, **caractérisé en ce que** plusieurs cames (32, 33, 34) forment au moins un élément de came multiple (35), au moins un élément de came multiple (35) étant raccordé à l'élément d'ajustement (36) dans un agencement axialement adjacent à l'élément d'ajustement (36) par le corps façonné (31).

6. Arbre à cames (1) selon l'une quelconque des revendications précédentes, **caractérisé en ce que** l'élément d'ajustement (36) est réalisé au moins en deux parties, une première partie étant formée par un élément de contour de commande (37) et une deuxième partie étant formée par le corps façonné (31).

7. Arbre à cames (1) selon la revendication 6, **caractérisé en ce que** l'élément de came multiple (35) présente une portion d'assemblage (38), au moins une portion d'assemblage (38) d'un élément de came multiple (35) étant introduite au moins en partie dans l'élément de contour de commande (37) réalisé sous forme annulaire, et le corps façonné (31) reliant l'un à l'autre la portion d'assemblage (38) et l'élément de contour de commande (37).

8. Arbre à cames (1) selon la revendication 7, **caractérisé en ce qu'**un épaulement d'engagement par correspondance de formes (39) est disposé sur la portion d'assemblage (38) de telle sorte qu'un engagement par correspondance de formes entre l'élément d'ajustement (36) et l'élément de came multiple (35) soit formé avec le corps façonné (31) au moins dans la direction de l'axe d'arbre (11).

9. Arbre à cames (1) selon la revendication 7 ou 8, **caractérisé en ce que** des trous (40) sont réalisés dans la portion d'assemblage (38), dans lesquels trous le matériau du corps façonné (31) s'engage par engagement par correspondance de formes.

10. Arbre à cames (1) selon les revendications 7 à 9, **caractérisé en ce que** sur un premier côté de l'élément de contour de commande (37) est disposé un premier élément de came multiple (35) avec une première portion d'assemblage (38) et sur un deuxième côté opposé de l'élément de contour de came (37) est disposé un deuxième élément de came multiple (35) avec une deuxième portion d'assemblage (38), de telle sorte que les deux éléments de came multiple (35) soient connectés l'un à l'autre par le corps façonné (31) et en particulier, l'élément de contour de commande (37) étant noyé dans le corps façonné (31) pour former l'élément d'ajustement (36).

11. Paquet de cames (12) comprenant au moins deux cames (13, 14, 26, 27, 28, 29, 32, 33, 34) et au moins un élément d'ajustement (15, 36) pour l'ajustement axial du paquet de cames (12) sur un arbre de support (10),
**caractérisé en ce que** les cames (13, 14, 26, 27, 28, 29, 32, 33, 34) et l'au moins un élément d'ajustement (15, 36) sont scellés ensemble dans un agencement axialement adjacent par un corps façonné (31), le corps (31) étant façonné par un procédé de formage primaire sur au moins une came (13, 14, 26, 27, 28, 29, 32, 33, 34) et l'élément d'ajustement (15, 36) et un assemblage étant formé par le corps façonné (31), réalisé de manière à être agencé directement sur l'arbre de support (10), les cames (13, 14, 26, 27, 28, 29, 32, 33, 34) comportant un endentement intérieur (16) pouvant être amené en prise avec un endentement extérieur (17) de l'arbre de support (10).

12. Procédé de fabrication d'un arbre à cames (1) avec un arbre de support (10) pouvant être disposé de façon mobile en rotation dans un axe d'arbre (11), au moins un paquet de cames (12) étant disposé de façon à pouvoir coulisser dans le plan axial sur l'arbre de support (10) et le paquet de cames (12)
**caractérisé par** au moins deux cames (13, 14, 26, 27, 28, 29, 32, 33, 34) et au moins un élément d'ajustement (15, 36) pour l'ajustement axial du paquet de cames (12), **caractérisé par** au moins les étapes suivantes :
- mise en place d'au moins deux cames (13, 14, 26, 27, 28, 29, 32, 33, 34) dans une position connexe à l'élément d'ajustement (15, 36) ;
- façonnage d'un corps (31) sur l'au moins une came (13, 14, 26, 27, 28, 29, 32, 33, 34) et l'élément d'ajustement (15, 36) par un procédé de formage primaire de telle sorte qu'un assemblage constitué de l'au moins une came (13, 14, 26, 27, 28, 29, 32, 33, 34) et de l'élément d'ajustement (15, 36) soit formé par coulée et
- mise en place directe du composite sur l'arbre de support (10), les cames (13, 14, 26, 27, 28, 29, 32, 33, 34) comportant un endentement intérieur (16) amené en prise, de façon à pouvoir être déplacé dans le plan axial, avec un endentement extérieur (17) de l'arbre de support (10).

13. Procédé selon la revendication 12, **caractérisé en ce que** plusieurs cames (32, 33, 34) forment au moins un élément de came multiple (35), au moins un élément de came multiple (35) étant raccordé à l'élément d'ajustement (36) dans un agencement axialement adjacent par le corps façonné (31), en particulier une partie de l'élément d'ajustement (36) étant formés par le corps façonné (31).

14. Procédé selon la revendication 12 ou 13, **caractérisé en ce que** l'au moins une came (13, 14, 26, 27, 28, 29, 32, 33, 34) et/ou l'au moins un élément de came multiple (35) et l'élément d'ajustement (36) sont amenés l'un par rapport à l'autre, dans un agencement connexe dans le plan axial, dans un outil de formage primaire, le corps (31) étant ensuite moulé par un procédé de coulée dans un espace creux délimité par l'outil de formage primaire, la came (13, 14, 26, 27, 28, 29, 32, 33, 34) ou l'élément de came multiple (35) et l'élément d'ajustement (36).
